# EUROPEAN PATENT SPECIFICATION

(11) **EP 2 078 461 B1**
(45) Date of publication and mention of the grant of the patent: **30.11.2011**
(21) Application number: 07830885.5
(22) Date of filing: 30.10.2007
(51) Int. Cl.: A23L 1/20, A23L 1/30

(54) **FOOD OR BEVERAGE CONTAINING HIGHLY UNSATURATED FATTY ACID, AND PROCESS FOR PRODUCTION THEREOF**
LEBENSMITTEL ODER GETRÄNK, DAS HOCH UNGESÄTTIGTE FETTSÄURE ENTHÄLT, UND VERFAHREN ZU SEINER HERSTELLUNG
ALIMENT OU BOISSON CONTENANT DES ACIDES GRAS HAUTEMENT INSATURÉS ET LEUR PROCÉDÉ DE FABRICATION

(30) Priority: 31.10.2006 JP 2006296749
(43) Date of publication of application: 15.07.2009
(73) Proprietor: Fuji Oil Company, Ltd., Osaka-shi, Osaka 542-0086 (JP)
(72) Inventor: YURA, Atsushi, Tokyo 108-6323 (JP); YOKOYAMA, Hitoshi, Izumisano-shi Osaka 598-8540 (JP)
(74) Representative: Hayes, Adrian Chetwynd
(86) International application number: PCT/JP2007/071151
(87) International publication number: WO 2008/053902

(56) References cited:
- EP-A1- 0 264 487
- WO-A1-02/37985
- WO-A1-2005/038008
- JP-A- 2004 059 848
- JP-A- 2004 105 045
- JP-A- 2004 290 012
- DATABASE CAPLUS CHEMICAL ABSTRACTS SERVICE, COLUMBUS, OHIO, US; 24 December 2002 (2002-12-24), XP002568703 Database accession no. 2002:971073 & JP 2002 369663 A (KENKO HYAKUNIJUSSAI KK) 24 December 2002 (2002-12-24)
- DATABASE WPI Week 200269 Thomson Scientific, London, GB; AN 2002-640955 XP002568704 -& JP 2002 253158 A (DOKURITSU GYOSEI HOJIN SHOKUHIN SOGO KEN) 10 September 2002 (2002-09-10)
- DATABASE WPI Week 199737 Thomson Scientific, London, GB; AN 1997-394251 XP002568705 & CN 1 111 959 A (WANG X) 22 November 1995 (1995-11-22)
- DATABASE WPI Week 199606 Thomson Scientific, London, GB; AN 1996-053693 XP002568706 -& JP 07 313057 A (KAWASHIMA S) 5 December 1995 (1995-12-05)
- DATABASE WPI Week 200420 Thomson Scientific, London, GB; AN 2004-208826 XP002568707 -& JP 2004 059848 A (MATSUI T) 26 February 2004 (2004-02-26)
- DATABASE WPI Week 200473 Thomson Scientific, London, GB; AN 2004-740697 XP002568808 & JP 2004 290012 A (OTSUKA SHOKUHIN KK) 21 October 2004 (2004-10-21)

## Description

### Technical Field

The present invention relates to a highly unsaturated fatty acid-containing food or beverage which allows intake of highly-unsaturated fatty acids and soybean nutrients and which has high storage stability. The present invention further relates to a food or beverage using the same.

### Background Art

Heretofore, It has been reported that fat-and-oils abundant in highly-unsaturated fatty acids (hereinafter referred to as "HUFA"), such as fish oils, have physiological functions, including prevention of high blood cholesterol concentrations. However, such fat-and-oils are very easily-oxidizable, as a result, cause the generation of deterioration odor during the process from production to storage and have undesirable effects on the quality of the food or beverage in terms of tastes when blended in a food or beverage. Thus, various attempts have been made to prevent the oxidation of such fat-and-oils.

As one of such attempts, Prior arts disclose production of nutritious soymilk and tofu (bean curd) by blending a HUFA-containing fat-and-oil with soymilk to prevent HUFA oxidation (Patent Document 1: JP 7-255406 A; Patent Document 2: JP 10-42819 A; and Patent Document 3: JP 2002-315535 A).

Prior arts also disclose blending of a HUFA-containing fat-and-oil with soymilk or isolated soybean protein for the purpose of obtaining nutritious soymilk instead of preventing HUFA oxidation (Patent Document 4: JP 8-205769 A; Patent Document 5: JP 2-200165 A; and Patent Document 6: WO 2002/037985 A1).

As described above, the techniques for simply blending the HUFA-containing fat-and-oil with soymilk or isolated soybean protein has been disclosed. However, the effect of soymilk on prevention of HUFA oxidation would be far from sufficient, and it is difficult to prevent the generation of deterioration odor to satisfactory degree during the production or storage process.

Then, prior arts disclose examples of encapsulating a HUFA-containing fat-and-oil in microcapsules before blending with soymilk (Patent Document 7: JP 60-160840 A), and blending with marine microalgae containing HUFA instead of with HUFA-containing fat-and-oil (Patent Document 8: JP 6-327429 A) as techniques for strongly preventing HUFA oxidation.

However, the microencapsulation process is complex and production of microcapsules is difficult in the microencapsulation technique. Meanwhile, when using the technique of blending marine microalgae, it is difficult to make flavor variations due to the characteristic flavor and odor of marine microalgae.

In addition, prior arts disclose acidification of mixture of a HUFA-containing fat-and-oil with soymilk by adding an organic acid or by fermenting with lactic acid bacteria, and acidification of liquid by blending a HUFA-containing fat-and-oil with pre-acidified soymilk (Patent Document 9: JP 8-308521 A; Patent Document 10: WO 2002/037976 A1; Patent Document 6: WO 2002/037985 A1; and Patent Document 11: JP 2004-105045 A).

As described above, since the acidification of soymilk makes the flavor more refreshing, a masking effect on the deterioration odor due to HUFA oxidation can be obtained to a certain degree. However, considering the experiments carried out by the present inventors, the effects of more efficiently preventing the generation of deterioration odor during long-term storage and of conferring emulsion stability still remain at unsatisfactory levels.

On the other hand, although prior arts disclose techniques for preventing HUFA oxidation by blending soybean powder with a HUFA-containing fat-and-oil (Patent Document 12: JP 57-174066 A; Patent Document 13: JP 61-170366 A; Patent Document 14: JP 63-74463 A; Patent Document 15: JP 7-313057 A; and Patent Document 16: JP 2002-253158 A), these inventions relate to solid compositions such as powders, flakes, tablets and capsules.

Prior arts further disclose technique for blending a processed soybean refined by enzymatic treatment to prepare single cells of the soybean with a HUFA-containing fat-and-oil (Patent Document 17: JP 2004-59848 A), and for preparing various food compositions by blending dried okara (bean curd refuse) with fish oil (Patent Document 18: JP 2006-50910 A). However, the food or beverage in a liquid form obtained using these techniques would become powdery and coarse texture.

As described above, a technology providing long-term stability of a HUFA-containing fat-and-oil in liquid composition against oxidation without generation of deterioration odor during storage has not been fully established.
Patent Document 1: JP 7-255406 A
Patent Document 2: JP 10-42819 A
Patent Document 3: JP 2002-315535 A
Patent Document 4: JP 8-205769 A
Patent Document 5: JP 2-200165 A
Patent Document 6: WO 2002/037985 A1
Patent Document 7: JP 60-160840 A
Patent Document 8: JP 6-327429 A
Patent Document 9: JP 8-308521 A
Patent Document 10: WO 2002/037976 A1
Patent Document 11: JP 2004-105045 A
Patent Document 12: JP 57-174066 A
Patent Document 13: JP 61-170366 A
Patent Document 14: JP 63-74463 A
Patent Document 15: JP 7-313057 A
Patent Document 16: JP 2002-253158 A
Patent Document 17: JP 2004-59848 A
Patent Document 18: JP 2006-50910 A

### Disclosure of the Invention

### Problems to be Solved by the Invention

An object of the present invention is to prevent the generation of odor caused by the oxidation of a food or beverage containing a HUFA containing fat-and-oil during storage and to provide a HUFA-containing liquid composition having excellent long-term flavor stability.

### Means for Solving the Problem

The present inventors have found that a food or beverage having improved emulsion stability and oxidation stability during storage and having excellent long term flavor stability can be produced, even if it contains a HUFA-containing fat-and-oil, by mixing and emulsifying the HUFA-containing fat-and-oil, ground soybean and water into emulsion, and then it is acidified by acid addition or fermentation using lactic acid bacteria. Thus, the present inventors have completed the present invention.

Thus, the present invention is:
1. HUFA-containing food or beverage characterized in that it comprises a HUFA-containing fat-and-oil, ground soybean and water which are incorporated and emulsified as raw materials wherein the HUFA contains four or more double bonds, the HUFA-containing food or beverage is in a liquid, paste or semi-solid form, and the HUFA-containing food or beverage has an acidic property;
2. The HUFA-containing food or beverage according to 1, wherein the ground soybean has an average particle diameter of 100 µm or less;
3. A process for producing HUFA-containing food or beverage, comprising: (A) blending and emulsifying ground soybean and a HUFA-containing fat-and-oil in an aqueous system; and (B) acidifying the emulsified mixture of the ground soybean, the HUFA-containing fat-and-oil and water, or the ground soybean wherein the HUFA contains four or more double bonds,
4. The process according to 3, wherein the ground soybean is prepared by a dry milling process and/or a wet milling process;
5. The process according to 4, wherein the ground soybean is prepared by the dry milling process followed by the wet milling process;
6. The process according to 4, wherein the wet milling process is carried out by high-temperature and high-pressure steam treatment; and
7. The process according to 3, wherein the acidification is carried out by fermentation with lactic acid bacteria and/or acid addition.

### Effect of the Invention

According to the present invention, it is possible to provide a food or beverage containing a HUFA-containing fat-and-oil, wherein the food or beverage having extremely high oxidation stability and emulsion stability and being resistant to flavor deterioration, even after prolonged storage, despite containing a HUFA-containing fat-and-oil. As a result, the opportunities for intake of HUFA, which has a variety of physiological functions including a cholesterol-lowering effect, can be increased and a synergetic effect produced by simultaneous intake of HUFA and various components contained in soybean can be expected.

### Best Mode for Carrying Out the Invention

In the HUFA-containing food or beverage of the present invention, a HUFA-containing fat-and-oil, a ground soybean and water are incorporated and homogenized as raw materials, and the food or beverage has an acidic property.

The process for producing the HUFA-containing food or beverage of the present invention includes (A) blending and homogenizing a ground soybean and a HUFA-containing fat-and-oil in an aqueous system; and (B) acidifying the homogenized mixture of the ground soybean, the HUFA-containing fat-and-oil and water, or the ground soybean.

Hereinafter, specific aspects of the present invention will be explained. In the following descriptions, unless otherwise specified, mere "%" refers to "mass percent".

The term "HUFA" refers to unsaturated fatty acids which contain four or more double bonds ("Dictionary of Biochemistry (2nd edition)," 1990, p. 1269, Tokyo Kagakudojin, Co., LTD) among polyunsaturated fatty acids (PUFA) which contain two or more double bonds. Any edible HUFA can be used. For example, HUFA include tetraunsaturated fatty acids, such as arachidonic acid, stearidonic acid, and conjugated tetraenoic acid (e.g., parinaric acid); pentaunsaturated fatty acids, such as eicosapentaenoic acid, docosapentaenoic acid, clupanodonic acid, and conjugated pentaenoic acid; hexa-unsaturated fatty acids, such as docosahexaenoic acid; and hepta-unsaturated fatty acids, such as conjugated heptanoic acid.

The HUFA-containing fat-and-oil to be incorporated in the HUFA-containing food or beverage of the present invention is a fat-and-oil including at least one HUFA as a component fatty acid of the glycerides contained in the food or beverage. More specifically, one to three component fatty acids of the glycerides are possessed by HUFA. Fat-and-oils containing HUFA as the component fatty acids can include, for example, fish oils, fat-and-oils produced by filamentous fungi, algae, protozoa, marine bacteria or the like, and processed fat-and-oils produced by processing these fat-and-oils such as fractionation and transesterification.

In fat-and-oils including one or more HUFA as the component fatty acids, either the same HUFA or a combination of different HUFA may be employed. Glycerides may include diglycerides and monoglycerides, in addition to trigylcerides. Thus, in the present invention, the term "fat-and-oil" is broadly interpreted to include monoglycerides and diglycerides because, as a matter of course, these glycerides are also very easily-oxidizable as long as they contain HUFA as the component of fatty acid. For example, these glycerides include 1,3-diacylglycerides, 1,2-diacylglycerides, 1-monoacylglycerides, 2-monoacylglycerides and the like. It should be understood that the HUFA-containing fat-and-oils may incorporate HUFA-free gylycerides.

Although there is no particular limitation to the proportion of HUFA to the total fatty acid content in the fat-and-oil, the present invention is particularly effective when HUFA is contained to such a degree that the flavor deterioration due to oxidation is remarkable. Such proportion is 3% or more, in general, and a proportion of 10% or more is more effective.

The ground soybean incorporated in the HUFA-containing food or beverage of the present invention can be obtained by grinding full fat or defatted soybean.

There is no particular limitation to the cultivar of the soybean which is raw material for the ground soybean of the present invention. Soybean such as yellow, green and black soybean can be used.

Soybean enriched with certain component such as 7S globulin, 11S globulin, oleosin, isoflavone, saponin, γ-aminobutyric acid, nicotianamine, lecithin, oligosaccharides, vitamins, and minerals, which are contained in or produced from soybean as a result of breeding, genetic engineering, sprouting treatment or the like can also be used.

Such soybean may include the hull and hypocotyl portions, or may be replaced in part or in total of the soybean with soybean hypocotyl. Soybean deprived of these portions can also be used.

Although the grinding degree of the ground soybean can be determined depending on the form and property of the food or beverage, the texture of the food becomes smoother and emulsion stabilizing effect due to the increase of surface area can be expected when the grinding degree is higher. In particular, it is preferable that an average particle diameter of ground soybean is 100 µm or less, more preferably 50 µm or less. It is preferable that the content of particles having particle diameter of 100 µm or less is 70% or higher because of facilitating particle dispersion in water.

The process for grinding soybeans can employ a wet milling process carried out in an aqueous system and/or a dry milling process carried out in a non-aqueous system. In the wet milling process, device such as homogenizer and ball mill can be used. In the dry milling process, grinding machine, such as jet mill, tornado mill, hammer mill and cutter mill, can be used.

In the present invention, any grinding method can be selected or can be used in combination. Although the present invention is not limited to any particular grinding method, a combined method can be used as one preferable embodiment; soybeans are ground by wet milling and dispersed in water, and further ground by wet milling. This method produces more fine particles with a smaller diameter, which are advantageous in increasing the surface area to be in contact with the fat-and-oil and allow for obtaining a food or beverage with less coarse texture.

The mixing of the HUFA-containing fat-and-oil and the ground soybean described below can be carried out before the step of grinding soybean is conducted. However, it should be noted that the addition of a HUFA-containing fat-and-oil at an early stage of the process increases the possibility of generating deterioration odor due to oxidation.

As another wet milling process, high-temperature and high-pressure steam treatment is preferred to obtain fine particles in a liquid form with low viscosity. The term "high-temperature and high-pressure steam treatment" refers to a treatment in which steam is contacted with a subject liquid under high temperature and high pressure. Typically, this treatment can employ a heating process one of the UHT sterilization (ultrahigh-temperature sterilization) methods that is a method of heating by directly contacting a treatment liquid with high-temperature and high-pressure steam, retaining this for a time, and then releasing a pressure to evaporate water in the treatment liquid and to cool.

More specifically, there are a steam injection method in which high-temperature and high-pressure steam is injected into a piping through which the treatment liquid is flown and a steam infusion method in which the treatment liquid is injected into high-temperature and high-pressure steam, and both methods can be adopted. For example, steam injection systems include a VTIS pasteurizer (manufactured by Alfa Laval Co.) and Kureha ultrahigh temperature instantaneous pasteurizer (Kureha Techno Eng. Co., Ltd), the steam fusion method include an infusion systems (Iwai Kikai Kogyo Co., Ltd), and similar pasteurizer can be also used.

Although it is not known exactly why such treatment gives an effect of fine grinding, it is presumed that when a suspension of ground soybean as a subject liquid is contacted with high-pressure steam, a high pressure shearing force is applied to the ground soybean while the soybean proteins contained in the ground soybean are in the heat-denatured state.

The temperature of the high-pressure steam is preferably at least 120°C, more preferably 120-165°C, and further preferably 135-155°C, and most preferably 140-155°C.

The steam treatment time preferably exceeds 10 seconds, more preferably is 15-80 seconds, and further preferably 20-70 seconds.

For more details, see WO 2007/116772. The ground soybean obtained by the high-temperature and high-pressure steam treatment described above is fine particle with average particle diameter of 15 µm or less, further 12 µm or less, and has smooth texture which is extremely difficult to be felt coarse texture. Furthermore, the suspension of the ground soybean after grinding has the physical property of a low viscosity in which a viscosity at 10°C when a solid content concentration of the suspension is 9% is 100 mPa·s or lower, further 50 mPa·s or lower, and has refreshing texture.

As described above, when the high-temperature and high-pressure steam treatment is used for wet milling, a ground soybean can be microparticulated while its low viscosity is retained, thereby improving the beverage suitability and contributing to the emulsion stability by increasing the emulsifying capacity due to the increase of the oil absorption capacity caused by the increase of surface area.

The HUFA-containing food or beverage of the present invention in which at least the HUFA-containing fat-and-oil as described above, a ground soybean and water are incorporated and homogenized. The term "homogenized" refers to retention of the condition which the HUFA-containing fat-and-oil is not separated from the other raw materials. This term is interchangeably used with the term "emulsified". In general, the emulsion (homogenization) is considered to be in a stable state if no fat-and-oil is separated from a food or beverage. The food or beverage is in a liquid, paste, or semi-solid form.

There is no particular limitation to the mixing ratio of the HUFA-containing fat-and-oil, the ground soybean and water as long as they can be homogenized. Typically, based on one part by weight of the HUFA-containing fat-and-oil, 1-20 parts by weight of the ground soybean, and 10-500 parts by weight of water can be added and homogenized. By this way, the HUFA-containing fat-and-oil is homogenized well with the ground soybean, resulting in a stably emulsified form and preventing the generation of deterioration odor due to oxidization.

The HUFA-containing fat-and-oil tends to generate deterioration odor caused by oxidation even if its content in the food or beverage is small. Furthermore, intake of oxidized fat-and-oil is undesirable from the nutritional point of view, even if its amount is small. Thus, the present invention has an effect even if a trace amount of the HUFA-containing fat-and-oil is incorporated in food or beverage, and there is no particular lower limit. However, when the content is too small, the odor is diluted to a low concentration at which the odor cannot be smelled, and the effect of the intake of the HUFA-containing fat-and-oil is considered insignificant. Thus, it is effective to blend the HUFA-containing fat-and-oil in food or beverage in an amount of typically 0.1% or more by weight, preferably 0.3-3% by weight. The amounts of the ground soybean and water to be incorporated can be determined in accordance with the mixing ratio described above.

Any order of mixing these raw materials can be used as long as they are finally mixed and homogenized in an aqueous system; these materials may be blended together simultaneously, or the HUFA-containing fat-and-oil may be mixed with a suspension prepared by mixing the ground soybean and water. However, considering that the HUFA-containing fat-and-oil is readily oxidized when it is contacted with air, it is more preferable to firstly prepare a suspension of the ground soybean and water, and then add the HUFA-containing fat-and-oil thereto in order to prevent the quality deterioration as much as possible at the early stage of the production process.

Mixing of the raw materials can be carried out by using a conventional means. For example, a solution tank used for production of a conventional beverage can be used, and the mixing can be carried out by rotating stirring wings. Homogenization can also be carried out by using a conventional means by mechanical homogenization such as high-speed stirring, high-pressure or ultrasonic. For example, it can be carried out by using homogenizer or homomixer. The pressure can be set at any level when a homogenizer is used. In general, a pressure ranging between 3 and 15 MPa is suitable.

The wet milling process described above can also be employed in this homogenization step. In this process, the emulsifying can be carried out under nitrogen substitution or by using an airless-type stirring device, so as not to contain oxygen. The homogenization process may be carried out by using a multi-step treatment; the first step of coarse emulsification is immediately followed by the subsequent step(s) of micro-emulsification.

The HUFA-containing food or beverage of the present invention has an acidic property. Particularly, the pH thereof is at most pH 6 or less, more preferably pH 5 or less, and further preferably pH 4.5 or less.

Oxidative deterioration of the HUFA-containing fat-and-oil can be prevented at a higher level by such acidification.

With respect to the timing of the acidification, the suspension of the ground soybean can be preliminarily acidified. Alternatively, an emulsion of the ground soybean, the HUFA-containing fat-and-oil and water can be prepared, followed by acidification.

There is no particular limitation to the acidification methods, as long as they are able to acidify the pH of the food or beverage. These methods to be used include: methods of adding an organic acid, such as citric acid, malic acid, acetic acid, gluconic acid and lactic acid, or an inorganic acid, such as phosphoric acid; methods of fermenting with an organic acid producing microorganism; or a combination of these methods. The acidification method can be appropriately selected depending on preference to, for example, flavor.

However, the fermentation methods are preferred, since they produce emulsions with higher emulsion stability and products with more refreshing flavor. In this case, these fermentation methods can be carried out by using a conventional process.

There is no particular limitation to the starters used for the fermentation as long as they are organic acid producing microorganisms. In general, lactic acid bacteria, bifidobacteria, acetic acid bacteria, butyric acid bacteria, or propionic acid bacteria can be used alone or combination thereof.

When lactic acid bacteria are used, strains which are generally used for production of yogurt can be used, for example, the genus *Lactobacillus* such as *Lactobacillus casei, Lactobacillus plantarum, Lactobacillus helveticus, Lactobacillus bulgaricus, Lactobacillus gasseri, Lactobacillus acidophilus, Lactobacillus lactis, Lactobacillus salivarius subsp. salivarius, Lactobacillus gallinarum, Lactobacillus amylovorus, Lactobacillus brevis subsp. brevis, Lactobacillus fermentum, Lactobacillus mali, Lactobacillus delbrueckii, Lactobacillus sanfranciscensis, Lactobacillus panex, Lactobacillus comoensis, Lactobacillus italicus, Lactobacillus leichmannii, Lactobacillus curvatus*, *Lactobacillus hilgardii, Lactobacillus reuteri, Lactobacillus pastorienus*, *Lactobacillus buchneri*, *Lactobacillus cellobiosus*, and *Lactobacillus fructivorans* ; the genus *Streptococcus* such as, for example, *Streptococcus thermophilus*, *Streptococcus lactis,* and *Streptococcus diacetylactis;* the genus *Lactococcus* such as *Lactococcus lactis subsp. lactis,* and *Lactococcus lactis subsp. cremoris;* and the genus *Leuconostoc* such as *Leuconostoc mesenteroides subsp. cremoris,* and *Leuconostoc lactis* can be used without any particular limitation.

When bifidobacteria are used, for example, *Bifidobacterium bifidum, Bifidobacterium longum, Bifidobacterium infantis*, *Bifidobacterium breve*, *Bifidobacterium adolescentis*, *Bifidobacterium angulatum, Bifidobacterium catenulatum, Bifidobacterium pseudocatenulatum, Bifidobacterium dentium*, *Bifidobacterium globosum, Bifidobacterium pseudolongum, Bifidobacterium cuniculi*, *Bifidobacterium choerinum, Bifidobacterium animalis, Bifidobacterium thermophilum, Bifidobacterium boum*, *Bifidobacterium magnum, Bifidobacterium asteroides, Bifidobacterium indicum, Bifidobacterium gallicum, Bifidobacterium lactis, Bifidobacterium inopinatum, Bifidobacterium denticolens, Bifidobacterium pullorum, Bifidobacterium suis, Bifidobacterium gallinarum, Bifidobacterium ruminantium*, *Bifidobacterium merycicum, Bifidobacterium saeculare, Bifidobacterium minimum, Bifidobacterium subtile,* and *Bifidobacterium coryneforme* can be used without limitation.

When acetic acid bacteria are used, the genus *Acetobacter* such as *Acetobacter aceti* and *Acetobacter orientalis*; and the genus *Gluconobacter* can be used without limitation. When butyric acid bacteria are used, the genus *Clostridium* such as *Clostridium* butyricum can be used

When propionic acid bacteria are used, for example*, Propionibacterium shermanii* can be used.

Among the microorganisms described above, lactic acid bacteria and bifidobacteria are particularly preferable to be used in the food and beverage, since fermentation carried out with these microbes produces yoqurt-like refreshing sourness that is plant origin. However, fermentation with lactic acid bacteria or bifidobacteria lowers the pH due to the generation of organic acids, such as lactic acids and acetic acids, and therefore, even when the soymilk without okara is used, fermented soymilk is once coagulated as tofu, resulting in heavy texture.

Thus, when soymilk containing okara is used, the fermented soymilk has even higher viscosity and has remarkable heavy and coarse texture unless the soymilk is refined well into fine particles. However, the present invention can produce a fermented product which is indistinguishable, in the physical properties, from the fermented material obtained from the fermentation of soymilk without okara.

The fermentation can be carried out by adding premade bulk starter or adding directly frozen concentrated microorganism or lyophilized concentrated microorganism to the fermentation material. The amount of the microorganism added can be adjusted according to the fermentation temperature and time. The fermentation is carried out for 3-48 hours at a fermentation temperature of 20-25°C, and preferably for 4-24 hours at 25-45°C, although it is not limited because it varies depending on the species of the microorganisms.

There is no particular limitation to the pH of the obtained fermented liquid emulsion, because it varies depending on the species of the microorganisms. When fermented with lactic acid bacteria or bifidobacteria, it is suitable that the pH is preferably 3.5-5.5, more preferably 4-5, and further preferably 4.2-4.7. When the pH immediately after the fermentation is not satisfied the desired pH, it can be adjusted with an organic acid such as lactic acid, citric acid and malic acid, or phosphoric acid.

It is preferable to carry out homogenization treatment to be a liquid state completely using, for example, homogenizer, since the fermented soymilk may form curd after fermentation. For example, a pressure of 3-30 MPa is suitable when a high pressure homogenizer is used. This homogenization treatment can provide smooth texture after the fermentation and clear aftertaste.

### (Other raw materials)

To the food or beverage of the present invention, auxiliary material can be blended depending on the type of the food or beverage and on the intended quality. For example, a raw material generally used in the production of fermented food such as yogurt and cheese can be used in a case where the acidification is carried out by fermentation with lactic acid bacteria.

Sugars to be used include mono- or disaccharides such as sucrose, glucose, maltose, lactose, trehalose and palatinose; oligosaccharides such as soybean oligosaccharide and lactosucrose; and sugar alcohols such as erythritol, xylitol, maltitol, reduced starch syrup, and solbitol. As the sweeteners, in addition to the sugars described above, high intensity sweeteners, such as thaumatin, aspartame, stevia, sucralose, and acesulfame potassium, can be used.

Thickeners such as agar, xanthan gum, guar gum, locust bean gum, gellan gum, pectin, carrageenan and water-soluble soybean polysaccharides, and gelatin can be used as stabilizers.

Fruit juice such as apple juice and lemon juice, seasoning agents, flavors and the like can be used as flavoring agents. Dietary fibers such as polydextrose, cellulose, inulin and water-soluble soybean polysaccharides, minerals such as calcium, magnesium, iron and zinc, and various physiologically functional components can be used for the purpose of nutritional enrichment.

The HUFA-containing food or beverage obtained as described above can be manufactured as it is or can be further treated, if necessary, to inactivate the biological activity of microorganisms by heat pasteurization and then can be manufactured as a pasteurized-type product. In such a case, the pasteurization conditions are sufficient for processing in temperature and time that the microorganisms are killed. The food or beverage can be condensed into a paste.

The food or beverage of the present invention has a characteristic in that a ground soybean containing the entire components of the soybean is used as raw material instead of conventional soymilk obtained by removing okara. More specifically, while soymilk is a soybean extract predominantly including proteins and sugars which are water-soluble components, the ground soybean abundantly includes other insoluble components, including dietary fibers and polar lipids such as lecithin, in addition to components described above.

These components work compositely under acidic conditions to significantly reduce the HUFA oxidation during storage, thereby preventing the generation of deterioration odor caused by the oxidation, and conferring higher emulsion stability during storage as compared to the food and beverage produced using soymilk as a raw material.

The food and beverage of the present invention is not limited, as long as it is acidic and is a homogenized mixture of a HUFA-containing fat-and-oil, a ground soybean and water, and it can be made into a food and beverage with various forms and properties, including, for example, drink forms such as soy beverage and soft drink; yogurt forms such as soy yogurt; jelly forms; cheese forms; mayonnaise forms; spread forms; ice-cream forms.

Furthermore, using the food or beverage as a raw material, for example, baked confectioneries, cakes, and gums can be manufactured.

### Examples

Embodiments of the present invention will be described with reference to the examples below. However the present invention is not limited to them.

### Example 1 (Production of HUFA-containing acidic soybean beverage)

A soybean suspension was prepared by dispersing 9 parts by weight of ground soybean (manufactured by Pelican, Co., Ltd.; 15 µm in average particle diameter, and the content of particles with a particle diameter of 100 µm or less is 92%), which was prepared by dry milling dehulled and dehypocotyled soybeans, into 91 parts by weight of water at 60°C. The mixture was stirred using a homomixer.

This soybean suspension was supplied into a steam injection-type direct high-temperature heating device (manufactured by TANAKA FOOD MACHINERY CO.) and subjected to a high-temperature and high-pressure steam treatment conducted at a steam temperature of 145°C and for 30 seconds contact time with steam, thereby obtaining a liquid of fine ground soybean.

The liquid of ground soybean thus obtained had 9.2% of solid components, average particle diameter of 10.97 µm, and viscosity of 54 mPa·s.

80 parts by weight of this liquid of ground soybean was heated to 60°C, and 5 parts of sucrose was dissolved into 14 parts of water before adding to this liquid. Then, they were homogenized using a homogenizer at a pressure of 10 MPa. To this liquid, 0.1% by weight of commercially available mixed lactic acid bacteria (lyophilized lactic acid bacteria) containing *Lactobacillus bulgaricus* and *Streptococcus thermophilus* were added as the starter and allowed to ferment for 6 hours at 41°C to pH 4.5.

To the fermenting liquid, 50% lactic acid was added and homogenized using a homogenizer at 10 MPa, followed by heat treatment at 90°C for one minute to terminate the fermentation and concomitantly the biological activity of the lactic acid bacteria. The acidic liquid of fine ground soybean thus obtained contained a total solid component of 12.3% and solid soybean component of 7.4% and had a pH of 4.3.

Subsequently, based on the formulation shown in Table 1, the acidic liquid of fine ground soybean and HUFA-containing fat-and-oil were emulsified to produce acidic soybean beverage containing HUFA. The purified fish oil "DHA-27G" (manufactured by HARIMA FOOD Co., Ltd.) was used as the HUFA-containing fat-and-oil. This purified fish oil contains, as HUFA, DHA (docosahexaenoic acid) and EPA (eicosapentaenoic acid) in a total amount of about 31%.

To the acidic liquid of fine ground soybean preliminarily emulsified after adding the purified fish oil while stirring the liquid using a homomixer, sucrose and stabilizing agent (polysaccharide thickener) preliminarily dissolved in water were added, and the mixture was adjusted to a pH of 3.9 with 50% lactic acid, followed by sterilization using a plate-type indirect heating device, thereby obtaining the HUFA-containing acidic soybean beverage of the present invention.

**(Table 1)**

| Raw Material | Formulary amount (%) |
|---|---|
| Acidic liquid of fine ground soybean | 52.50 |
| Sucrose | 4.00 |
| Stabilizing agent (polysaccharide thickener) | 0.05 |
| Purified fish oil | 0.50 |
| 50% Lactic acid | 0.30 |
| Water | Remain |
| Total | 100.00 |

The HUFA-containing acidic soybean beverage thus obtained was filled into plastic container and stored in refrigerator (5°C) and at ambient temperature (25°C). As a result, the sample stored for one month in the refrigerator had an extremely low generation of deterioration odor caused by the oxidation, as compared with the sample immediately after the preparation, and kept excellent flavor. This sample also had good emulsion stability and little creaming phenomenon (phenomenon of separating oil components) was observed.

### Comparative Example 1

A HUFA-containing acidic soymilk was prepared according to the method described in Example 1, except that soymilk (containing 7.2% solid soy content) obtained by conventional method, removing the okara from the soaked and milled soybean, was used in place of a ground soybean. The sample stored for one month in the refrigerator generated deterioration odor caused by oxidation and was difficult to drink. The emulsion stability of this sample was also poor compared to the sample prepared in Example 1.

The results of a quality evaluation of the samples prepared Example 1 and Comparative Example 1 are summarized below (Table 2).

The samples stored at 5°C were compared using a sensory evaluation method. The odor of the samples stored at 25°C were measured using "Fragrance & Flavor Analyzer FF-2A" (SHIMAZU Co., Ltd.) and compared using odor index values. The odor index scale is provided in Offensive Odor Control Act and is used as indicatives to express the intensity of odor by dilution ratios to arrive at the odorless level. For example, if a certain odor has become odorless after 1000-fold dilution, the intensity of the odor is represented by "odor concentration of 1000". When the odor concentration is expressed as the exponential of 10, exponential part thereof is then multiplied by 10 resulting in the odor index of that odor. Accordingly, the odor concentration of 1000 corresponds to odor index of 30 and the odor concentration of 10000 corresponds to odor index of 40. In addition, as a control, another sample was prepared according to the method described in Example 1 without addition of the fish oil. When the odor of this control was measured, the odor index was 25 (the odor concentration of 316).

The emulsion stability was examined by comparing visually the existence and separation degree of oil separation of these samples.

**(Table 2)**

| | | | Control | Example 1 | Comparative Example 1 |
|---|---|---|---|---|---|
| Sensory evaluation (stored for one month at 5°C) | | | ⊙ | ⊙ | Δ-○ |
| Odor index value (stored for one month at 25°C) | | | 25 | 26 | 27 |
| | Odor concentration | | (316) | (398) | (501) |
| | Emulsion stability | | ⊙ | ○-⊙ | Δ |
| Sensory scores | | ⊙:good flavor without deterioration odor due to oxidation | | | |
| | | ○:good flavor with little deterioration odor due to oxidation | | | |
| | | Δ:good flavor with some deterioration odor due to oxidation | | | |
| | | ×:poor flavor with strong deterioration odor due to oxidation | | | |
| Emulsion stability | | ⊙:Stable with no separation of oil | | | |
| | | ○:Stable with little separation of oil | | | |
| | | Δ:Unstable with some separation of oil | | | |
| | | ×:Unstable with complete separation of oil | | | |

### Comparative Example 2

A HUFA-containing soybean beverage was prepared according to the method described in Example 1, except that lactic acid fermentation was not carried out. The HUFA-containing soybean beverage thus obtained has a pH of 6.7. The sample stored for one month in the refrigerator generated deterioration odor caused by oxidation and was difficult to drink. The emulsion stability of this sample was also poor compared to the sample prepared in Example 1, since some separation of oil was observed after the one month storage at 5°C.

### Example 2

An acidic soybean beverage was prepared according to the method described in Example 1, except that a ground soybean prepared by wet milling was used instead of a ground soybean prepared by dry milling in Example 1. 4 parts of water was added to 1 part of dehulled and dehypocotyled soybean, and the soybean was allowed to absorb the water, and the water was then drained for a while. To one part of the dehulled and dehypocotyled soybean expanded by absorption of water, 6 parts of hot water (90°C) was added and the soybean was then ground by wet milling using a Comitrol (manufactured by URSCHEL CO.), thereby obtaining a soybean suspension having a particle diameter of 30-70 µm.

This soybean suspension was subjected to direct high-temperature heating treatment as described in Example 1, thereby preparing a liquid of fine ground soybean.

The liquid of ground soybean thus obtained had 9.1% of solid content, an average particle diameter of 21.36 µm, and a viscosity of 425 mPa·s.

The liquid of fine ground soybean thus obtained was used to prepare acidic soybean beverage containing HUFA according to the method described in Example 1. The sample of this liquid stored for one month in the refrigerator had extremely low generation of deterioration odor caused by the oxidation, as compared with the sample immediately after the preparation, and kept excellent flavor. This sample also had good emulsion stability with little creaming. However, since this sample had a high viscosity compared to the sample obtained in Example 1, the liquid prepared in Example 1 is considered to be more suitable for production of low viscosity beverage.

### Example 3

An acidic soybean beverage containing HUFA-containing fat-and-oil was prepared according to the method described in Example 1, except that a high-pressure homogenizer was used instead of carrying out direct high-pressure heating treatment. The soybean suspension obtained in Example 1 was homogenized using a high-pressure homogenizer at a pressure of 15 MPa, to prepare liquid of fine ground soybean. The liquid of ground soybean thus obtained had 9.5% of solid content, an average particle diameter of 27.87 µm, and a viscosity of 136 mPa·s.

The liquid of fine ground soybean thus obtained was used to prepare acidic soybean beverage containing HUFA according to the method described in Example 1. This sample stored for one month in the refrigerator had little generation of deterioration odor caused by the oxidation, as compared with the sample immediately after the preparation, and kept excellent flavor. This sample also had emulsion stability, however, some separation of oil was observed as compared to Example 1 and felt coarse texture.

### Example 4

A HUFA-containing soybean beverage was prepared according to the method described in Example 1, except that acidification was carried out by adjusting the pH to 4.3 by adding lactic acid instead of carrying out lactic acid fermentation.

The acidic liquid of fine ground soybean thus obtained was used to prepare acidic soybean beverage containing HUFA according to the method described in Example 1. This sample stored for one month in the refrigerator had little generation of deterioration odor caused by the oxidation, as compared with the sample immediately after the preparation, and kept good flavor. This sample also had emulsion stability, however, some separation of oil was observed as compared to the fermented soybean beverage prepared in Example 1. Similarly, an acidic liquid of ground soybean was prepared by adding citric acid instead of lactic acid. The result obtained by this preparation was similar to the case of using lactic acid.

### Example 5

An acidic soybean beverage containing HUFA was prepared according to the method described in Example 1, except that the liquid of fine ground soybean was fermented with lactic acid after adding the purified fish oil "DHA-27G" (manufactured by HARIMA FOOD Co., Ltd.). This sample stored for one month in the refrigerator had a better quality than that of the sample prepared in Comparative Example 1. However, deterioration odor was sensed in comparison with Example 1. Thus, generation of deterioration odor caused by oxidation can be prevented and better quality of the liquid was obtained when the purified fish oil was added after acidification of the liquid of fine ground soybean.

## Claims

1. A HUFA-containing food or beverage **characterized in that** it comprises a HUFA-containing fat-and-oil, ground soybean and water which are incorporated and emulsified as raw materials,
wherein the HUFA contains four or more double bonds, the HUFA-containing food or beverage is in a liquid, pastor semi-solid form, and the HUFA-containing food or beverage has an acidic property.

2. The HUFA-containing food or beverage according to claim 1, wherein the ground soybean has an average particle diameter of 100 um or less.

3. A process for producing HUFA-containing food or beverage, comprising:
(A) blending and emulsifying ground soybean and a HUFA-containing fat-and-oil in an aqueous system, and
(B) acidifying the emulsified mixture of the ground soybean, the HUFA-containing fat-and-oil and water, or the ground soybean,
wherein the HUFA contains four or more double bonds.

4. The process according to claim 3, wherein the ground soybean is prepared by a dry milling process and/or a wet milling process.

5. The process according to claim 4, wherein the ground soybean is prepared by the dry milling process followed by the wet milling process.

6. The process according to claim 4, wherein the wet milling process is carried out by high-temperature and high-pressure steam treatment.

7. The process according to claim 3, wherein the acidification is carried out by fermentation with lactic acid bacteria and/or acid addition.

## Patentansprüche

1. Hochungesättigte Fettsäure (HUFA) enthaltendes Lebensmittel oder Getränk, welches **dadurch gekennzeichnet ist, dass** es hochungesättigte Fettsäure (HUFA) enthaltendes Fett/Öl, gemahlene Sojabohne und Wasser enthält, welche als Rohstoffe aufgenommen und emulgiert werden,
wobei die hochungesättigte Fettsäure (HUFA) vier oder mehr Doppelbindungen aufweist, das hochungesättige Fettsäure (HUFA) enthaltende Lebensmittel oder Getränk in einer flüssigen, pastenartigen oder halbfesten Form vorliegt, und das hochungesättigte Fettsäure (HUFA) enthaltende Lebensmittel oder Getränk eine säurebildende Eigenschaft besitzt.

2. Hochungesättige Fettsäure (HUFA) enthaltendes Lebensmittel oder Getränk nach Anspruch 1, **dadurch gekennzeichnet, dass** die gemahlenen Sojabohnen einen durchschnittlichen Teilchendurchmesser von 100µm oder weniger aufweisen.

3. Verfahren zur Herstellung eines hochungesättigte Fettsäure (HUFA) enthaltenden Lebensmittels oder Getränks, wobei das Verfahren die folgenden Schritte aufweist:
(A) Mischen und Emulgieren von gemahlenen Sojabohnen und hochungesättigte Fettsäure (HUFA) enthaltenden Fett/Öl in einem wässrigen System; und
(B) Säuern der emulgierten Mischung aus der gemahlenen Sojabohne, dem hochungesättigte Fettsäure (HUFA) enthaltenden Fett/Öl und Wasser, oder der gemahlenen Sojabohne,
**dadurch gekennzeichnet, dass** die hochungesättigte Fettsäure (HUFA) vier oder mehr Doppelbindungen aufweist.

4. Verfahren nach Anspruch 3, **dadurch gekennzeichnet, dass** die gemahlene Sojabohne durch ein Trockenmahlverfahren und/oder ein Nassmahlverfahren aufbereitet wird.

5. Verfahren nach Anspruch 4, **dadurch gekennzeichnet, dass** die gemahlene Sojabohne mit Hilfe des Trockenmahlverfahrens gefolgt von dem Nassmahlverfahren aufbereitet wird.

6. Verfahren nach Anspruch 4, **dadurch gekennzeichnet, dass** das Nassmahlverfahren durch Dampfbehandlung bei hoher Temperatur und hohem Druck durchgeführt wird.

7. Verfahren nach Anspruch 3, **dadurch gekennzeichnet, dass** die Säuerung bzw. Säurebildung durch Fermentierung mit Milchsäurebakterien und/oder durch Säurezugabe erfolgt.

## Revendications

1. Aliment ou boisson contenant des acides gras hautement insaturés, **caractérisé en ce qu'**il comprend du soja moulu huileux et gras contenant des acides gras hautement insaturés et de l'eau qui sont incorporés et émulsifiés comme matériaux bruts, où les acides gras hautement insaturés contiennent quatre liaisons double ou plus, l'aliment ou la boisson contenant les acides gras hautement insaturés se présentent sous une forme de liquide, de pâte ou semi-solide, et l'aliment ou la boisson contenant des acides gras hautement insaturés a une propriété acidique.

2. Aliment ou boisson contenant des acides gras hautement insaturés selon la revendication 1, où le soja moulu a un diamètre de particule moyen de 100µm ou moins.

3. Procédé de production d'un aliment ou d'une boisson contenant des acides gras hautement insaturés, comprenant:
(A) mélanger et émulsifier du soja moulu et une graisse et huile contenant des acides gras hautement insaturés dans un système aqueux, et
(B) acidifier le mélange émulsifié du soja moulu, de la graisse et huile contenant les acides gras hautement insaturés et l'eau, ou bien le soja moulu, où les acides gras hautement insaturés contiennent quatre liaisons double ou plus.

4. Procédé selon la revendication 3, dans lequel le soja moulu est préparé par un processus de broyage à sec et/ou un processus de broyage humide.

5. Procédé selon la revendication 4, dans lequel le soja moulu est préparé par un processus de broyage à sec suivi du processus de broyage humide.

6. Procédé selon la revendication 4, où le processus de broyage humide est exécuté par un traitement de vapeur sous haute température et haute pression.

7. Procédé selon la revendication 3, dans lequel l'acidification est exécutée par fermentation avec des bactéries d'acide lactique et/ou d'addition d'acide.
